# FASCICULE DE BREVET EUROPEEN

(11) **EP 3 430 660 B1**
(45) Date de publication et mention de la délivrance du brevet: **17.06.2020**
(21) Numéro de dépôt: 17714877.2
(22) Date de dépôt: 17.03.2017
(51) Int. Cl.: H01M 4/58, H01M 10/052, H01M 10/0565, H01M 4/38, H01M 4/40

(54) **BATTERIE LITHIUM MÉTAL POLYMÈRE À HAUTE DENSITÉ D'ÉNERGIE**
LITHIUM-METALLPOLYMER-BATTERIE MIT HOHER ENERGIEDICHTE
LITHIUM METAL POLYMER BATTERY HAVING A HIGH ENERGY DENSITY

(30) Priorité: 18.03.2016 FR 1652306
(43) Date de publication de la demande: 23.01.2019
(73) Titulaire: Blue Solutions, 29500 Ergué Gabéric (FR); Institut Polytechnique de Grenoble, 38031 Grenoble Cedex 1 (FR)
(72) Inventeur: BOUCHET, Renaud, 38700 La Tronche (FR); DESCHAMPS, Marc, 29000 Quimper (FR)
(74) Mandataire: Goulard, Sophie
(86) Numéro de dépôt international: PCT/FR2017/050630
(87) Numéro de publication internationale: WO 2017/158310

(56) Documents cités:
- WO-A1-2013/034848
- RENAUD BOUCHET ET AL: "Single-ion BAB triblock copolymers as highly efficient electrolytes for lithium-metal batteries", NATURE MATERIALS, vol. 12, no. 5, 31 mars 2013 (2013-03-31), pages 452-457, XP055316945, GB ISSN: 1476-1122, DOI: 10.1038/nmat3602
- FENG SHAOWEI ET AL: "Single lithium-ion conducting polymer electrolytes based on poly[(4-styrenesulfonyl)(trifluoromethanes ulfonyl)imide] anions", ELECTROCHIMICA ACTA, ELSEVIER SCIENCE PUBLISHERS, BARKING, GB, vol. 93, 30 janvier 2013 (2013-01-30), pages 254-263, XP028990442, ISSN: 0013-4686, DOI: 10.1016/J.ELECTACTA.2013.01.119
- PAN QIYUN ET AL: "Construction of a lithium ion transport network in cathode with lithiated bis(benzene sulfonyl)imide based single ion polymer ionomers", JOURNAL OF POWER SOURCES, vol. 283, 26 février 2015 (2015-02-26), pages 279-288, XP029125100, ISSN: 0378-7753, DOI: 10.1016/J.JPOWSOUR.2015.02.137
- GAO JIAN ET AL: "Brief overview of electrochemical potential in lithium ion batteries", CHINESE PHYSICS B, CHINESE PHYSICS B, BRISTOL GB , vol. 25, no. 1 1 January 2016 (2016-01-01), pages 18210-1, XP009504327, ISSN: 1674-1056, DOI: 10.1088/1674-1056/25/1/018210 Retrieved from the Internet: URL:http://stacks.iop.org/1674-1056/25/i=1 /a=018210?key=crossref.025ee9ea7536ccc3652 df3cc35ddeab5 [retrieved on 2016-01-20]

## Description

La présente invention concerne une batterie Lithium Métal Polymère (LMP) de haute densité d'énergie comprenant une électrode positive incluant une matière active d'électrode positive de haut potentiel et un copolymère à blocs de type AB ou BAB, A étant un bloc oxyde d'éthylène et B étant un bloc polymère anionique à base de bis(trifluorométhylsulfonyl)imidure de lithium.

Elle s'applique en particulier au domaine des véhicules électriques et hybrides, dans lequel il existe une demande croissante en systèmes autonomes et de haute densité énergétique, tout en garantissant un faible impact environnemental.

Les batteries Lithium Métal Polymère actuellement sur le marché se présentent sous la forme d'un film mince enroulé plusieurs fois ou de plusieurs films minces empilés. Ce film mince enroulé ou empilé a une épaisseur de l'ordre d'une centaine de micromètres et comprend : une électrode négative (anode) assurant la fourniture des ions lithiums lors de la décharge ; une électrode positive (cathode) agissant comme un réceptacle où les ions lithiums viennent s'intercaler ; un électrolyte polymère solide conducteur des ions lithium et situé entre l'électrode positive et l'électrode négative ; et un collecteur de courant relié à l'électrode positive pour assurer la connexion électrique. L'électrode négative est généralement constituée d'une feuille de lithium métallique ou d'un alliage de lithium ; l'électrolyte polymère solide est généralement composé d'un polymère à base de poly(oxyde d'éthylène) (POE) et d'au moins un sel de lithium ; l'électrode positive est habituellement un matériau dont le potentiel de travail est inférieur à 3,7-3,8V vs Li⁺/Li (i.e. le potentiel d'insertion/désinsertion du lithium est inférieur à 3,7-3,8V vs Li⁺/Li) tel que par exemple LiFePO₄ (potentiel de 3,43V vs Li⁺/Li); et le collecteur de courant est généralement constitué d'une feuille de métal. La conductivité des ions est assurée par la dissolution du sel de lithium dans le poly(oxyde d'éthylène). Le POE de haute masse moléculaire dopé au sel de lithium possède de très bonnes propriétés mécaniques à température ambiante, mais est également un polymère semi-cristallin. La structure cristalline restreint la mobilité des chaînes et diminue la conductivité ionique du polymère. Au-dessus de la température de fusion du POE (T_{f} ∼ 60-65°C), la conductivité ionique augmente considérablement, mais à ces températures, le POE devient un liquide visqueux et perd sa stabilité dimensionnelle. Ainsi, bien que le POE soit un très bon conducteur ionique, facile à formuler, il n'a pas une tenue mécanique suffisante aux températures habituellement mises en œuvre dans une batterie LMP (60-80°C).

D'autres polymères à base de poly(oxyde d'éthylène) (POE) ont été décrits, tels que des copolymères statistiques de type poly(oxyde d'éthylène-stat-oxyde de propylène) (i.e. POE-stat-PPO), des copolymères à bloc de type polystyrène-b-POE (i.e. PS-b-POE), des POE réticulés ou des copolymères comprenant des chaînes acrylates ou méthacrylates sur lesquelles sont branchées du POE. Par ailleurs, il est connu d'ajouter au polymère à base de POE des particules inorganiques ou organiques, éventuellement nanométriques, telles que des particules d'oxyde d'aluminium, d'oxyde de titane ou des nano-fibrilles de cellulose. Toutefois, ces matériaux polymères éventuellement composites remplaçant le POE dans l'électrolyte polymère solide visent principalement à renforcer les propriétés mécaniques du l'électrolyte polymère solide et/ou à casser la cristallinité du POE afin d'obtenir une meilleure conductivité à basse température et/ou une barrière à la croissance dendritique et ne permettent pas d'améliorer la densité d'énergie de la batterie.

Par ailleurs, dans les électrolytes polymères solides précités, le sel de lithium est dissous dans une matrice polymère de POE et la fraction de charge portée par Li⁺ (également appelé nombre de transport cationique) est faible (<20%), du fait de la forte interaction entre le cation lithium et les chaînes de POE, ce qui limite les performances électriques. La valeur du nombre de transport cationique détermine la part de courant transporté par le cation. Un nombre de transport cationique faible entraîne la formation d'un gradient de concentration en sel dans l'épaisseur de l'électrolyte lors du fonctionnement de la batterie. Ce comportement génère un appauvrissement en sel à l'électrode, induisant une augmentation de la résistance de l'électrolyte et des performances en puissance diminuées, et favorise la formation de dendrites de lithium, engendrant une baisse du rendement faradique et à terme, des court-circuits.

Afin de remédier à ce problème, la demande internationale WO 2013/034848 décrit des copolymères di-blocs de type AB ou tri-blocs de type BAB, dans lesquels le bloc A est une chaîne de polyoxyéthylène non substituée ayant une masse moléculaire moyenne en nombre inférieure ou égale à 100 kDa et le bloc B est un polymère anionique susceptible d'être préparé à partir d'un ou plusieurs monomères choisis parmi les monomères vinyliques et dérivés, lesdits monomères étant substitués par l'anion d'un sel de sulfonyl(trifluorométhylsulfonyl)imidure de lithium (TFSILi) de formule (I) suivante : 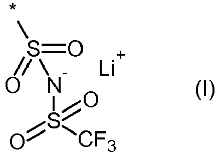 dans laquelle * représente le point d'attachement de l'anion dudit sel de formule (I) audit monomère par l'intermédiaire d'une liaison covalente ou d'une chaîne alkyle linéaire ayant de 1 à 5 atomes de carbone.

La demande internationale WO 2013/034848 décrit également une batterie lithium métal polymère comprenant les composants suivants : une électrode négative constituée de lithium métallique, un électrolyte polymère solide constitué d'un des copolymères tri-blocs de type BAB précités, et une électrode positive constituée de 60% en masse de LiFePO₄, 8% en masse de noir de carbone et 32% en masse dudit copolymère tri-bloc. Toutefois, la densité d'énergie d'une telle batterie n'est pas optimisée (e.g. densité de 515 Wh/kg environ par rapport à la masse de matériau actif). Par ailleurs, les copolymères di-blocs de type AB ou tri-blocs de type BAB à base de POE précités, bien qu'ayant un nombre de transport égal à 1, ont une conductivité ionique plus faible que le POE seul.

En parallèle, la recherche s'est orientée vers la modification de la matière active d'électrode positive dans une batterie LMP comprenant à titre d'électrolyte polymère solide un polymère à base de POE et un sel de lithium. Toutefois, les tests en batterie LMP complète sont assez peu répandus et sont essentiellement limités à l'utilisation de matières actives à bas potentiel vs Li⁺/Li (i.e. avec un potentiel inférieur à 3,7V, et de préférence inférieur à 3,8V). En effet, les matériaux polymères à base de POE se décomposent/s'oxydent généralement au-delà de 3,7-3,8V vs Li⁺/Li, entraînant une dégradation irréversible des performances de la batterie. Par conséquent, lorsqu'une matière active d'électrode positive de potentiel supérieur ou égal à 3,7-3,8V vs Li⁺/Li est utilisée, telle que LiFeₓMn₁₋ₓPO₄ dans laquelle 0 < x < 1 (potentiel de 4,25V vs Li⁺/Li en fin de charge), une chute rapide de capacité est observée comme cela est démontré dans l'exemple 2 comparatif de la présente demande et tel que décrit ci-après. Par conséquent, il n'est pas encore possible de tirer avantage de matières actives fonctionnant à un potentiel plus élevé que celui de LiFePO₄ (potentiel de 3,43V vs Li⁺/Li), puisque les électrolytes polymères solides à base de POE sont connus pour induire une durée de vie limitée du système.

Par conséquent, aucun art antérieur ne décrit à la fois la modification de la matière active et de l'électrolyte polymère solide, afin d'améliorer les performances d'une batterie LMP en termes de densité d'énergie, tout en garantissant une bonne résistance au cyclage.

Ainsi, le but de la présente invention est de pallier les inconvénients de l'art antérieur précité et de fournir une batterie lithium métal polymère à haute densité d'énergie tout en garantissant une bonne stabilité au cyclage (i.e. capable de fonctionner sur un grand nombre de cycles).

Le but de l'invention est atteint par la batterie LMP qui va être décrite ci-après.

Les inventeurs de la présente demande ont en effet découvert de façon surprenante qu'il était possible de combiner, au sein d'une batterie LMP, un matériau d'électrode positive de haut potentiel d'insertion/désinsertion des ions Li⁺ avec un électrolyte polymère solide à base de POE qui ne se décompose pas ou ne s'oxyde pas dans la fenêtre électrochimique d'utilisation de la cellule, ledit matériau d'électrode positive présentant une chimie de surface compatible avec l'électrolyte polymère solide à base de POE.

La présente invention a donc pour objet une batterie LMP (lithium métal polymère) comprenant :
- au moins une électrode négative comprenant du lithium métal ou un alliage de lithium métal,
- au moins une électrode positive comprenant au moins une matière active dont le potentiel est supérieur à 3,7V vs Li⁺/Li, et de préférence à 3,8 V vs Li⁺/Li, et de préférence encore supérieur ou égal à 4V, au moins un copolymère bloc P₁ et au moins un agent générant une conductivité électronique, ladite électrode positive étant éventuellement supportée par un collecteur de courant, et
- au moins un électrolyte polymère solide comprenant :
   * au moins un copolymère bloc P₁, ou
   * au moins un sel de lithium et au moins un matériau polymère à base de poly(oxyde d'éthylène) (POE) choisi parmi un copolymère à blocs polystyrène-poly(oxyde d'éthylène) (PS-b-POE), un copolymère à blocs polystyrène-poly(oxyde d'éthylène)-polystyrène (PS-b-POE-b-PS), un copolymère statistique poly(oxyde d'éthylène-stat-oxyde de propylène) (i.e. POE-stat-PPO) associé à un agent de renfort, un copolymère statistique poly(oxyde d'éthylène-stat-oxyde de butylène) (i.e. POE-stat-PBO) associé à un agent de renfort et un poly(oxyde d'éthylène) associé à un agent de renfort,
ledit agent de renfort étant choisi parmi les nanofibrilles de cellulose, les nanoparticules céramiques telles que les nanoparticules d'oxyde de titane, d'oxyde d'aluminium ou d'oxyde de silicium et un polymère ou copolymère fluoré tel que le polyfluorure de vinylidène ou le copolymère de fluorure de vinylidène-hexafluoropropylène,
ladite batterie lithium métal polymère étant caractérisée en ce que :
* la matière active de l'électrode positive est choisie parmi :
   (1) les matières actives de type olivine choisies parmi celles de formule LiTₜT'₁₋ₜPO₄ dans laquelle 0 < t < 1 et T et T' sont différents et sont choisis parmi Fe, Mn, Co, Ni et Ti, en particulier celles de formule LiFeₓMn₁₋ₓPO₄ dans laquelle 0 < x ≤ 0,4 et celles de formule LiMg_{y}Mn_{1-y}PO₄ dans laquelle 0 < y ≤ 0,2,
   (2) les matières actives de type fluorophosphates telles que LiVPO₄F, et
   (3) les matières actives de type oxyde lamellaire LiMO₂ avec M représentant un mélange d'au moins deux métaux choisis parmi Al, Ni, Mn et Co, telles que LiNi_{1/3}Mn_{1/3}Co_{1/3}O₂ (famille des NMC), LiNi_{0.8}Co_{0.15}Al_{0.05}O₂ (famille des NCA) ou LiNi_{0,5}Mn_{0,5}O₂, et
* le copolymère bloc P₁ est un copolymère di-bloc de type AB ou tri-bloc de type BAB dans lequel le bloc A est une chaîne de polyoxyéthylène non substituée ayant une masse moléculaire moyenne en nombre inférieure ou égale à 100 kDa environ ; et le bloc B est un polymère anionique susceptible d'être préparé à partir d'un ou plusieurs monomères vinyliques substitués par l'anion d'un sel sulfonyl(trifluorométhylsulfonyl)imidure de lithium (TFSILi) de formule (I) suivante : 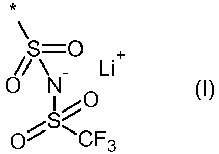
dans laquelle * représente le point d'attachement dudit anion de formule (I) audit monomère vinylique par l'intermédiaire d'une liaison covalente, d'une chaîne alkyle linéaire, éventuellement perfluorée, ayant de 1 à 5 atomes de carbone ou d'une chaîne alcoxy linéaire, éventuellement perfluorée, ayant de 1 à 5 atomes de carbone, et de préférence par l'intermédiaire d'une liaison covalente.

Dans la présente invention, l'expression « chaîne alcoxy linéaire ayant de 1 à 5 atomes de carbone » signifie une chaîne alkyle linéaire ayant de 1 à 5 atomes de carbone et comprenant en outre un ou plusieurs atomes d'oxygène dans ladite chaîne alkyle.

Dans la présente invention, l'expression « une matière active dont le potentiel est supérieur à 3,7V vs Li⁺/Li » signifie que le potentiel maximal de la matière active, au cours de la charge ou de la décharge de la batterie, est supérieur à 3,7V vs Li⁺/Li.

De préférence, la matière active telle que définie dans l'invention a un potentiel inférieur à 4,3V vs Li⁺/Li. Cela signifie que le potentiel maximal de la matière active, au cours de la charge ou de la décharge de la batterie, est de préférence inférieur à 4,3V vs Li⁺/Li.

Dans la batterie LMP de l'invention, les matériaux d'électrode positive sélectionnés sont capables de supporter des tensions élevées (supérieures à 3,7-3,8V vs Li⁺/Li) et les matériaux polymères sélectionnés pour l'électrode positive et l'électrolyte polymère solide ne se décomposent pas dans la fenêtre électrochimique d'utilisation de la cellule et sont compatibles avec les matières actives sélectionnées. Par ailleurs, le copolymère bloc P₁ présente un nombre de transport cationique proche de l'unité, ce qui permet de réduire la polarisation aux électrodes pendant les étapes de charge et de décharge rapides et ainsi d'obtenir une plus grande densité de puissance, tout en évitant la germination des dendrites. Par ailleurs, la batterie LMP de l'invention permet de réaliser de nombreux cycles à des régimes assez drastiques avec une borne d'arrêt en charge à 4,3V vs Li⁺/Li, sans que la capacité ne vienne s'effondrer. La batterie de l'invention constitue donc un bon compromis pour garantir une bonne résistance au cyclage et de bonnes performances en puissance et en densité d'énergie.

Le copolymère bloc P₁ présente une nanoséparation de phases avec des domaines majoritairement composés de POE et des domaines majoritairement composés de PVTFSILi (PV signifie polymère vinylique, c'est-à-dire polymère obtenu à partir de monomères vinyliques). La présence du sel de lithium particulier TFSILi améliore la stabilité du copolymère bloc P₁, notamment à des tensions élevées vs Li⁺/Li. La phase POE possède des propriétés de transport ionique au sein de la batterie et la phase polaire PVTFSILi se place préférentiellement du côté de l'électrode positive pour former une couche interfaciale nanométrique stable et non réactive entre la matière active d'électrode positive et la phase POE. Grâce à cette couche, la phase POE, qui apporte la conduction ionique au sein de l'électrolyte polymère solide et de l'électrode positive, ne ressent pas les effets délétères liés au potentiel à la surface de l'électrode.

Dans les copolymères bloc P₁ conformes à l'invention de l'électrode positive (respectivement de l'électrolyte polymère solide), l'anion du sel de formule (I) est attaché sur la chaîne constituant le bloc B, soit directement par l'intermédiaire d'une liaison covalente, soit par l'intermédiaire d'une chaîne alkyle ou alcoxy, éventuellement perfluorée. Le seul ion mobile après dissociation du copolymère est le cation Li⁺, ce qui lui confère des propriétés spécifiques (bonne conductivité, nombre de transport des cations Li⁺ (t⁺) proche de 1) tout en ayant également une bonne tenue mécanique.

Selon l'invention, le bloc A du copolymère bloc P₁ de l'électrode positive (respectivement de l'électrolyte polymère solide) comprend de préférence de 225 à 2250 motifs d'oxyde d'éthylène, et encore plus préférentiellement de 500 à 1150 motifs d'oxyde d'éthylène. Une valeur tout particulièrement préférée est 795 motifs d'oxyde d'éthylène.

La masse moléculaire moyenne du bloc A du copolymère bloc P₁ de l'électrode positive (respectivement de l'électrolyte polymère solide) est toujours inférieure ou égale à 100 kDa environ, et varie préférentiellement de 10 à 60 kDa environ et encore plus préférentiellement de 15 à 50 kDa environ.

La chaîne de polyoxyéthylène du copolymère bloc P₁ de l'électrode positive (respectivement de l'électrolyte polymère solide) étant non substituée, cela signifie que le POE au sein du copolymère est linéaire. Une telle configuration permet de garantir une bonne tenue mécanique de l'électrolyte et de l'électrode composite.

Les monomères vinyliques substitués par l'anion d'un sel sulfonyl(trifluorométhylsulfonyl)imidure de lithium (TFSILi) de formule (I) du copolymère bloc P₁ de l'électrode positive (respectivement de l'électrolyte polymère solide) peuvent être des monomères vinyliques aromatiques ou non aromatiques.

À titre d'exemple de monomères vinyliques aromatiques, on peut citer le styrène de sulfonyl(trifluorométhylsulfonyl)imidure de lithium et ses dérivés, notamment les dérivés dans lesquels le groupement phényle du styrène est substitué par un ou plusieurs groupes choisis parmi les groupes méthyle, éthyle, *tert*-butyle, un atome de brome et un atome de chlore.

Le styrène de sulfonyl(trifluorométhylsulfonyl)imidure de lithium est préféré et peut être représenté par la formule (II-a) suivante :

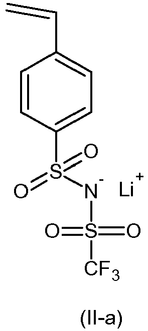

À titre d'exemple de monomères vinyliques non aromatiques, on peut citer l'acrylate de sulfonyl(trifluorométhylsulfonyl)imidure de lithium, le méthacrylate de sulfonyl(trifluorométhylsulfonyl)imidure de lithium, l'acrylamide de sulfonyl(trifluorométhylsulfonyl)imidure de lithium, le méthacrylamide de sulfonyl(trifluorométhylsulfonyl)imidure de lithium, l'éthylène-sulfonyl(trifluorométhylsulfonyl)imidure de lithium, le propylène-sulfonyl(trifluorométhylsulfonyl)imidure de lithium, les diènes-sulfonyl(trifluorométhylsulfonyl)imidure de lithium et la maléimide- sulfonyl(trifluorométhylsulfonyl)imidure de lithium.

Le méthacrylate de sulfonyl(trifluorométhylsulfonyl)imidure de lithium est préféré et peut être représenté par la formule (II-b) suivante :

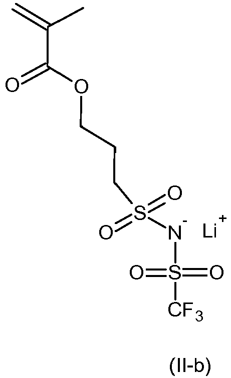

Le bloc B du copolymère bloc P₁ de l'électrode positive (respectivement de l'électrolyte polymère solide) résulte de préférence uniquement de la polymérisation d'un ou plusieurs monomères vinyliques substitués par l'anion d'un sel sulfonyl(trifluorométhylsulfonyl)imidure de lithium (TFSILi) de formule (I) tel que défini dans l'invention.

Les monomères vinyliques aromatiques sont préférés.

Le copolymère bloc P₁ de l'électrode positive (respectivement de l'électrolyte polymère solide) est de préférence un copolymère tri-bloc de type BAB.

Selon une forme de réalisation préférée de l'invention, le copolymère bloc P₁ de l'électrode positive (respectivement de l'électrolyte polymère solide) est choisi parmi les copolymères tri-blocs de type P(STFSILi)-*b*-POE-*b-*P(STFSILi). En effet, un tel copolymère bloc P₁ permet d'observer une excellente résistance au cyclage en termes de capacité et d'efficacité coulombique, notamment lorsqu'il est utilisé dans l'électrode positive.

Des copolymères blocs P₁ de l'électrode positive (respectivement de l'électrolyte polymère solide) particulièrement préférés selon la présente invention sont les copolymères P(STFSILi)-*b*-POE-*b*-P(STFSILi), dans lesquels chacun des blocs PSTFSILi présente une masse moléculaire moyenne en nombre variant de 2000 à 7500 g/mol environ et le bloc central de POE une masse moléculaire moyenne en nombre de 35000 g/mol environ.

Un copolymère bloc P₁ de l'électrode positive (respectivement de l'électrolyte polymère solide) encore plus particulièrement préféré selon la présente invention est le copolymère P(STFSILi)-*b*-POE-*b*-P(STFSILi), dans lequel chacun des blocs PSTFSILi présente une masse moléculaire moyenne en nombre d'environ 4900 g/mol environ et le bloc central de POE une masse moléculaire moyenne en nombre de 35000 g/mol environ.

Les copolymères blocs P₁ P(STFSILi)-*b*-POE-*b*-P(STFSILi) utilisés de l'électrode positive (respectivement dans l'électrolyte polymère solide) peuvent présenter un rapport P(STFSILi)/POE variant de 10 à 80% en masse environ, de préférence variant de 46 à 73 % en masse environ, et de préférence encore de 50 à 70% en masse environ.

Les copolymères blocs P₁ de l'électrode positive (respectivement de l'électrolyte polymère solide) peuvent être préparés par toute méthode de polymérisation contrôlée (ATRP (« Atom Transfert Radical Polymerization »), RAFT (« *Reversible Addition Fragmentation Chain Transi*r »), anionique, cationique, NMP (« *Nitroxide-Mediated Radical Polymerization* »)),
- soit directement en mettant en œuvre un monomère vinylique tel que défini dans l'invention portant l'anion d'un sel sulfonyl(trifluorométhylsulfonyl)imidure de potassium (TFSIK) de formule (I') suivante : 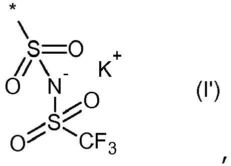 dans laquelle * représente le point d'attachement dudit anion de formule (I') audit monomère par l'intermédiaire d'une liaison covalente, d'une chaîne alkyle linéaire, éventuellement perfluorée, ayant de 1 à 5 atomes de carbone ou d'une chaîne alcoxy linéaire, éventuellement perfluorée, ayant de 1 à 5 atomes de carbone, et de préférence par l'intermédiaire d'une liaison covalente,
- soit indirectement en mettant en œuvre un monomère vinylique tel que défini dans l'invention (i.e. non substitué par l'anion d'un sel sulfonyl(trifluorométhylsulfonyl)imidure de potassium), puis par post-fonctionnalisation du polymère obtenu [i.e. par greffage de l'anion du sel de formule (I')].

Ladite polymérisation (ou la post-fonctionnalisation lorsqu'elle existe) peut alors être suivie d'une étape d'échange ionique de façon à remplacer le cation K⁺ par un cation Li⁺.

À titre d'exemple, lorsque la synthèse est réalisée selon la méthode NMP, elle consiste à synthétiser dans un premier temps une macroalcoxyamine à base de POE puis à copolymériser ladite macroalcoxyamine et les monomères vinyliques porteurs d'un anion de formule (I') tels que définis dans l'invention, puis à réaliser un échange ionique de façon à remplacer le cation K⁺ par un cation Li⁺. La synthèse des macroalcoxyamines à base de POE peut être réalisée selon la méthode décrite dans la demande internationale WO 2007/113236. La synthèse des monomères vinyliques porteurs de l'anion de formule (I') tels que définis dans l'invention peut par exemple être réalisée selon la méthode décrite par R. Meziane et al. [Electrochimica Acta, 2011, 57, 14-19].

De façon plus précise, elle comprend au moins les étapes suivantes :
i) la copolymérisation des monomères vinyliques portant l'anion de formule (I') tels que définis dans l'invention avec une macroalcoxyamine de formule (III) suivante :

   POE-(SG1)ₙ (III)

   dans laquelle :
   - n = 1 ou 2
   - SG1 est un motif de formule suivante : 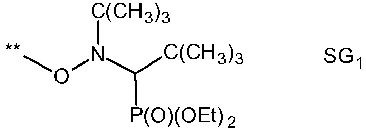
      ** étant le point d'attachement des motifs SG1 à l'une des extrémités du motif POE lorsque n = 1 et à chacune des extrémités du motif POE lorsque n = 2, POE étant une chaîne de poly(oxyde d'éthylène) ayant une masse moléculaire moyenne en nombre inférieure à 100 kDa environ ; puis
ii) l'échange des cations K⁺ par des cations Li⁺.

Ainsi, selon ce procédé, la mise en réaction d'une macroalcoxyamine de formule (III) dans laquelle n = 1 conduit à l'obtention d'un copolymère di-bloc de type AB et la mise en œuvre d'une macroalcoxyamine de formule (III) dans laquelle n = 2, conduit à l'obtention d'un copolymère tri-bloc de type BAB.

La première étape est de préférence réalisée dans un solvant polaire tel que par exemple le N,N-diméthylformamide (DMF), le diméthylsulfoxyde (DMSO) ou l'eau, à une température variant de 80 à 120 °C environ, pendant une durée de 2 à 20 heures environ.

L'échange des cations de l'étape ii) peut par exemple être réalisé au moyen d'une membrane de dialyse, en utilisant un sel de lithium tel que par exemple le chlorure de lithium.

Lorsque l'étape ii) est terminée, le copolymère résultant est alors de préférence lavé pour éliminer l'excès de sel de lithium et éventuellement l'excès de monomère vinylique qui n'aurait pas polymérisé, puis la solution est de préférence évaporée sous vide pour permettre le stockage du copolymère.

Selon une forme de réalisation particulièrement préférée de l'invention, l'électrolyte polymère solide est constitué d'un ou plusieurs copolymères blocs P₁ tels que définis dans l'invention ou d'un sel de lithium et d'un matériau polymère à base de poly(oxyde d'éthylène) tels que définis dans l'invention.

Selon un mode de réalisation, l'électrolyte polymère solide comprend au moins un copolymère bloc P₁.

Lorsque l'électrolyte polymère solide comprend au moins un copolymère P₁, il ne comprend pas, de préférence, de sels de lithium autres que ceux de formule (I) telle que définie dans l'invention qui sont greffés aux blocs B par l'intermédiaire de leurs anions.

Lorsque l'électrolyte polymère solide comprend au moins un sel de lithium et au moins un matériau polymère à base de poly(oxyde d'éthylène), le matériau polymère préféré est un copolymère statistique poly(oxyde d'éthylène-stat-oxyde de butylène) (i.e. POE-stat-PBO) associé à un polymère ou copolymère fluoré tel qu'un copolymère de fluorure de vinylidène-hexafluoropropylène.

L'électrolyte polymère solide ne comprend pas, de préférence, de plastifiants et/ou de solvants, tels que ceux utilisés conventionnellement dans les électrolytes polymères gélifiés ou dans les électrolytes liquides (e.g. carbonates).

Le sel de lithium de l'électrolyte polymère solide (lorsque celui-ci comprend au moins un sel de lithium et au moins un matériau polymère à base de poly(oxyde d'éthylène)) peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄) et le nitrate de lithium (LiNO₃), le lithium bis(fluorosulfonyl)imide (LiFSI), et leurs mélanges.

LiTFSI est le sel de lithium préféré.

L'électrolyte polymère solide peut en particulier se présenter sous toute forme appropriée, par exemple sous la forme d'une feuille, d'un film ou d'une membrane. L'électrolyte polymère solide peut être préparé par toute technique connue de l'homme du métier telle que par exemple par enduction, par extrusion ou par pressage (à froid ou à chaud).

L'agent générant une conductivité électronique peut être choisi parmi le noir de carbone, le carbone SP, le noir d'acétylène, les fibres et nanofibres de carbone, les nanotubes de carbone, le graphène, le graphite, les particules et fibres métalliques et l'un de leurs mélanges.

L'agent générant une conductivité électronique peut représenter de 0,1 à 10% en masse environ, et de préférence de 0,1 à 2% en masse environ, par rapport à la masse totale de l'électrode positive.

L'électrode positive comprend en outre au moins un copolymère bloc P₁ tel que défini dans l'invention, ce qui permet d'empêcher la formation d'un gradient de concentration dans l'épaisseur de l'électrode positive lors du cyclage et ainsi d'améliorer les performances en puissance de la batterie ou d'augmenter le grammage de la cathode. Cela permet également d'assurer des interfaces stables avec la matière active de haut potentiel.

Le copolymère bloc P₁ tel que défini dans l'invention peut représenter de 15 à 35% en masse environ, de préférence de 18 à 28% en masse environ, par rapport à la masse totale de l'électrode positive.

Le copolymère bloc P₁ de l'électrode positive peut être identique ou différent du copolymère bloc P₁ de l'électrolyte polymère solide de la batterie. Ils sont de préférence identiques.

Selon une forme de réalisation préférée de l'invention, le grammage de l'électrode positive (c'est à dire la quantité de matière active d'électrode positive/cm²/surface) est supérieur ou égal à 0,2 mAh/cm² environ, et de préférence, il varie de 0,5 à 3,5 mAh/cm² environ.

Le collecteur de courant peut être un collecteur de courant en inox ou en aluminium, éventuellement recouvert d'une couche à base de carbone (couche anticorrosion).

La matière active de l'électrode positive peut représenter de 60 à 85% en masse environ, et de préférence de 65 à 80% en masse environ, par rapport à la masse totale de l'électrode positive.

La matière active de l'électrode positive est un matériau d'intercalation du lithium. Elle présente une chimie de surface compatible avec le copolymère bloc P₁ tel que défini dans l'invention.

Selon une forme de réalisation particulièrement préférée de l'invention, la matière active de l'électrode positive est revêtue d'une couche de carbone.

Le carbone revêtant la matière active représente de préférence de 0,1 à 5% en masse environ, par rapport à la masse de la matière active.

La couche de carbone est de préférence sous la forme d'une couche d'épaisseur variant de 1 à 4 nm environ.

La présence de la couche de carbone permet d'améliorer l'interface : matière active de haut potentiel-copolymère bloc P₁, et ainsi d'obtenir une bonne résistance au cyclage, notamment en termes de capacité.

Cette couche de carbone est généralement présente sur les matières actives (1) de type olivine telles que définies dans l'invention, notamment afin de pallier à la conductivité électronique modérée de ces matières actives.

Elle peut être également présente sur les matières actives (3) de type oxyde lamellaire telles que définies dans l'invention.

La matière active de l'électrode positive est de préférence une matière active (1) ou (3), et de préférence encore une matière active (1) de type olivine telle que définie dans l'invention.

Les matières actives (1) de type olivine préférées sont celles de formule LiFeₓMn₁₋ₓPO₄ dans laquelle 0 < x ≤ 0,4, et de préférence dans laquelle x = 0,2.

Les matières actives (3) de type oxyde lamellaire préférées sont celles de la famille des NMC telles que LiNi_{1/3}Mn_{1/3}Co_{1/3}O₂.

La matière active de l'électrode positive est une matière active réversible des ions lithium. En d'autres termes, elle peut insérer ou désinsérer de manière réversible des ions lithium.

La température de fonctionnement idéal de la batterie de l'invention est de 60 à 100°C environ.

La présente invention est illustrée par les exemples de réalisation suivants, auxquels elle n'est cependant pas limitée.

### EXEMPLES

Matières premières utilisées dans les exemples :
- chlorure d'oxalyle, acétonitrile anhydre (Alfa-Aesar),
- sel de sodium de l'acide 4-styrène sulfonique, diméthylformamide (DMF), triéthylamine, diméthylaminopyridine (DMAP), chlorure de lithium, dichlorométhane, chlorure d'acryloyle, éther diéthylique, tetrahydrofurane (THF) (Sigma-Aldrich),
- trifluorométhylsulfonamide (Rhodia),
- Nitroxyde de formule (SG1) (Arkema) suivante : 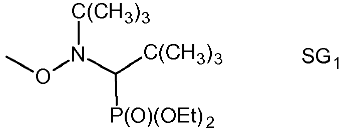
- POE α,ω hydroxylé (Mn = 10 000 g/mol) (Sigma-Aldrich),
- MAMA-SG1 de formule suivante (Arkema) : 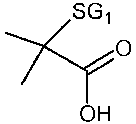
- noir de carbone C65 (Timcal),
- collecteur de courant en inox (Goodfellow),
- feuille de lithium métal (Blue Solutions).

### Exemple 1 : préparation d'une batterie lithium métal polymère conforme à l'invention

### 1) Synthèse d'un copolymère tri-bloc P₁ : PSTFSILi-b-PEO-b-PSTFSILi comprenant 28% en masse de PSTFSILi

### 1.1) Synthèse du 4-styrène-sulfonyl(trifluorométhylsulfonyl)imidure de potassium (STFSIK)

### 1.1.1) Synthèse du chlorure de 4-sulfonyl-styrène

2 ml de chlorure d'oxalyle (23,3 mmoles) et 0,087 g (1 mmole) de diméthylformamide (DMF) ont été ajoutés dans 40 ml d'acétonitrile anhydre. Le milieu réactionnel a été agité pendant 5 heures pour promouvoir la formation d'un complexe de Vilsmeier-Haack (complexe entre le DMF et le chlorure d'oxalyle (CH₃)₂N⁺=CClH). Une fois que la solution a viré au jaune, 4 g de sel de sodium de l'acide 4-styrène sulfonique ont été ajoutés lentement au mélange réactionnel, sous atmosphère d'azote et à température ambiante. Le mélange réactionnel a ensuite été agité pendant 24 heures à température ambiante. Le précité de NaCl formé a été éliminé par filtration. On a obtenu 42 ml de solution de chlorure de 4-sulfonyl-styrène.
RMN ¹H (300 MHz ; DMSO-d6 ; 298 K) : δ ppm 7,59 (d , 2H) ; 7,44 (d, 2H) ; 6,72 (q, 1H) ; 5,84 (d, 1H) ; 5,27 (d, 1H) ; 5,27 (d, 1H).
RMN ¹³C (75 MHz ; DMSO-d6 ; 298 K) : δ ppm 146,91 ; 137,66 ; 136,16 ; 125,93 ; 125,72 ; 115,18.

### 1.1.2) Synthèse du 4-styrène-sulfonyl(trifluorométhylsulfonyl)imidure de potassium (STFSIK)

8,1 ml de triéthylamine (28,2 mmoles), 2,89 g de trifluorométhylsulfonamide (19,4 mmoles) et une quantité catalytique de DMAP (environ 215 mg) ont été ajoutés successivement dans 30 ml d'acétonitrile anhydre. Le mélange réactionnel a été agité pendant 1 heure. La solution de chlorure de 4-sulfonyl-styrène obtenu ci-dessus à l'étape 1.1.1) a été refroidie à 0°C, puis on y a ajouté lentement le milieu réactionnel contenant le trifluorométhylsulfonamide. Le mélange résultant a été placé sous agitation magnétique énergique pendant 16 heures. Après évaporation du solvant, on a récupéré un solide brun qui a ensuite été dissous dans 50 ml de dichlorométhane. Cette solution a été lavée deux fois avec 20 ml d'une solution aqueuse de NaHCO₃ à 4 % puis avec 20 ml d'acide chlorhydrique 1M. Le 4-styrène-sulfonyl(trifluorométhylsulfonyl)imidure de potassium a été obtenu par neutralisation du monomère acide à l'aide d'un excès de K₂CO₃ dans l'eau. La suspension résultante a été agitée pendant 1 heure, filtrée et séchée pour donner 4,2 g du produit attendu sous la forme d'un solide jaune clair. Sa recristallisation dans l'eau a donné 3,63 g de poudre (rendement d'environ 53 %).
RMN ¹H (300 MHz ; DMSO-d6 ; 298 K) : δ ppm 7,73 (d , 2H) ; 7,57 (d, 2H) ; 6,79 (q, 1H) ; 5,95 (d, 1H) ; 5,38 (d, 1H).
RMN ¹³C (75 MHz ; DMSO-*d6* ; 298 K) : δ ppm 144,21 ; 139,55 ; 135,57 ; 126,43 ; 125,87 ; 126,36.

### 1.2) Synthèse de la macroalcoxyamine PEO-diSG1

On a synthétisé la macroalcoxyamine SG1-MAMA-POE-MAMA-SG1 (ou PEO-diSG1) de formule suivante : 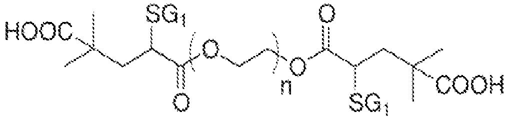 dans laquelle SG1 est tel que défini dans l'invention et la valeur de p est telle que la masse molaire moyenne en nombre (i.e. Mn) du POE est de 35 000 g/mol.

Pour ce faire, 10 g de POE-α,ω hydroxylé (Mn = 35 000 g/mol) et 1,4 ml de triéthylamine ont été solubilisés dans un ballon tricol contenant 40 ml de dichlorométhane. Le mélange réactionnel a été dégazé par bullage d'azote pendant 20 minutes. À l'aide d'une ampoule à brome, on a ensuite introduit goutte à goutte, et à une température de 0°C, 0,9 ml de chlorure d'acryloyle solubilisé (5 éq.) dans 10 ml de dichlorométhane. On a laissé réagir pendant environ 15 heures. Le mélange réactionnel a été filtré pour éliminer le chlorure de triéthylammonium. Le filtrat a été lavé deux fois avec 20 ml d'une solution aqueuse saturée en NaHCO₃. La phase organique a été précipitée dans de l'éther diéthylique. Le diacrylate de POE a été récupéré par filtration puis séchage sous vide. Ensuite, 2 g de diacrylate de POE ont été introduits dans un « Schlenk » muni d'un « Rotaflo ». 0,16 g (4,2 mmoles) de MAMA-SG1 de formule indiquée ci-dessus, dissoute dans 6 ml de THF, ont été introduits sur le diacrylate de POE. La suspension a été désoxygénée par barbotage d'azote pendant 30 minutes. Le « Schlenk » a été plongé dans un bain d'huile thermostaté à 100°C pendant 1 heure. Le THF a été évaporé sous vide à température ambiante. Le POE-(MAMA-SG1)2 (ou PEO-diSG1) a été récupéré par précipitation dans de l'éther.

On obtenu la PEO-diSG1 attendue.

### 1.3) Synthèse d'un copolymère tri-bloc P₁ : PSTFSILi-b-PEO-b-PSTFSILi à 28 % en masse de PSTFSILi

2,5 g de macroalcoxyamine PEO-diSG1 obtenue ci-dessus à l'étape 1.2) précédente (i.e. 6,9 x 10⁻⁵ mole), 1,2 g de STFSIK (i.e. 3,4 x 10⁻³ mole) obtenu ci-dessus à l'étape 1.1), 2,5 x 10⁻³ g de nitroxyde de formule SG1 (pureté à 85% massique d'où 7,2 x 10⁻⁶ mole), et 3,5 ml de DMF ont été placés dans un ballon tricol équipé d'un réfrigérant, d'un bulleur et d'un barreau aimanté. Le mélange a été dégazé pendant 20 min par barbotage d'argon afin d'éliminer l'oxygène du milieu réactionnel. Le mélange a ensuite été chauffé à 110°C pendant 4 h. La réaction de polymérisation a été stoppée en plongeant le ballon dans un bain de glace. Le solvant (DMF) a ensuite été évaporé sous vide et le résidu obtenu a été dissous dans 30 ml d'eau permutée. La solution obtenue a alors été placée dans une membrane de dialyse vendue sous la dénomination commerciale Cellu-Sep® T2 par la société Orange Scientific, ayant un seuil de rétention (MWCO) de 6 000-8 000 Da et dialysée avec 4 fois 1 litre de solution de chlorure de lithium (0,25 mol/l), afin de réaliser l'échange de cations K⁺ par les cations Li⁺ (0,25 mol/l), puis par 4 fois 1 litre d'eau permutée afin d'éliminer l'excès de chlorure de lithium. L'étape de dialyse a également permis d'éliminer le monomère et le DMF restant. La solution de copolymère a ensuite été évaporée sous vide.

On a obtenu par enduction le copolymère à blocs attendu dans lequel chacun des blocs PSTFSILi présentait une masse moléculaire moyenne en nombre de 6800 g/mol (estimé à partir de 28 % massique mesuré par RMN) et le bloc central de POE une masse moléculaire moyenne en nombre de 35000 g/mol, le bloc PSTFSILi représentant 28 % en masse de la masse totale du copolymère.

Le copolymère tri-bloc P₁ PSTFSILi-POE-PSTFSILi tel qu'obtenu par enduction était sous la forme d'un film de 70 µm environ d'épaisseur.

### 2) Préparation d'une électrode positive

Une électrode positive sous la forme d'un film a été préparée de la façon suivante : un mélange de 0,5 g de LiFe_{0,4}Mn_{0,6}PO₄, revêtu d'une couche nanométrique de carbone (2 nm environ d'épaisseur), et 0,065 g de noir de carbone a été broyé manuellement dans du cyclohexane pendant 20 minutes. Après séchage du mélange résultant, la poudre obtenue a été versée dans une solution de copolymère tri-bloc P₁ PSTFSILi-POE-PSTFSILi tel que préparé à l'étape 1) ci-dessus dissous à 10% en masse dans une solution 50/50 en volume de dichlorométhane/acétonitrile et correspondant à une masse de copolymère tri-bloc P₁ de 0,242 g.

Le mélange résultant a été laissé sous agitation magnétique pendant 2 heures puis dégazé quelques secondes sous vide avant d'être enduit sur un collecteur de courant en inox à l'aide de la méthode Docteur Blade bien connue de l'homme du métier. Après évaporation des solvants, l'électrode obtenue sous la forme d'un film a été séchée à 60°C pendant 2 heures puis à température ambiante sous vide pendant 24 heures et enfin stockée en boite à gant.

L'électrode positive obtenue comprenait 62% en masse de matière active, 30% en masse de copolymère tri-bloc P₁ et 8% en masse de noir de carbone. Elle présentait une épaisseur de 12 µm environ. Le grammage obtenu était de 0,25 mAh/cm².

### 3) Préparation d'une batterie LMP

Une batterie LMP a été préparée par assemblage en boîte à gants :
- d'un film de copolymère tri-bloc P₁ PSTFSILi-POE-PSTFSILi tel que préparé à l'étape 1) d'épaisseur 70 µm,
- d'une feuille de lithium métal d'épaisseur 60 µm environ, et
- d'une électrode positive d'épaisseur 12 µm environ telle que préparée à l'étape 2).

L'assemblage a ensuite été laminé à 3,4 bars et à 80°C pour former une batterie. La batterie a ensuite été scellée dans un coffee bag pour être testée en dehors de la boîte à gants.

Des tests de cyclage ont été menés à 80°C dans une enceinte Memmert à 80°C (± 0,2°C) au moyen d'un potentiostat Biologic VMP3. Les conditions de cyclage étaient galvanostatiques à C/15, D/10 ou D/7. Les bornes d'arrêts en charge étaient de 4,2 ou 4,3V vs Li⁺/Li et à la décharge 2,8 V vs Li⁺/Li.

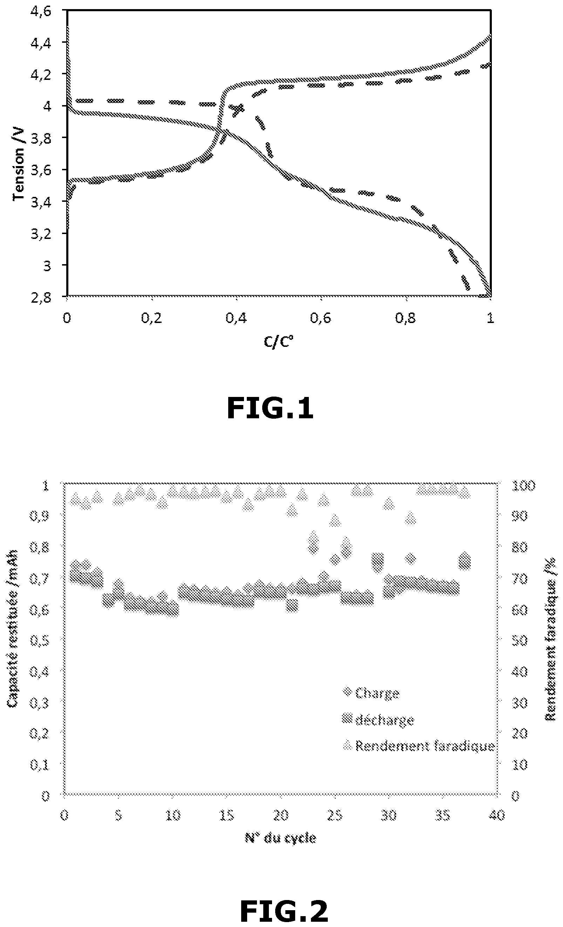

La figure 1 annexée montre la tension (en volts, V) en fonction de C/C⁰ (C étant la capacité restituée en cours de cyclage en mAh et C⁰ étant la capacité totale attendue en mAh) à 80°C de la batterie conforme à l'invention telle que préparée dans l'exemple 1 (courbe avec le trait plein) et à titre comparatif à 25°C d'une batterie non conforme à l'invention (courbe avec les pointillés).

La batterie non conforme à l'invention comprenait une feuille de lithium métal comme électrode négative, un séparateur Celgard imprégné d'une solution contenant 1M de LiPF₆ dans un mélange carbonate d'éthylène/diméthylcarbonate (1/1 en masse) à titre d'électrolyte liquide, et un mélange de 80% en masse de LiFe_{0,4}Mn_{0,6}PO₄ revêtu d'une couche nanométrique de carbone (2 nm environ d'épaisseur), 10% en masse de noir de carbone C65 et 10% en masse de PVdF, comme électrode positive.

On observe une moins forte polarisation et des plateaux bien mieux définis à la décharge avec la batterie de l'invention.

Ainsi, l'utilisation d'un électrolyte solide tel que celui de l'invention à la place d'un électrolyte liquide permet de garantir de bonnes performances électrochimiques, voire meilleures, tout en permettant d'assurer une bonne tenue mécanique au sein de la batterie et d'éviter tous les problèmes de sécurité liés à l'utilisation d'un électrolyte liquide.

La figure 2 annexée montre la capacité (en mAh) en fonction du nombre de cycles de la batterie de l'invention pendant la charge (courbe avec les losanges pleins) et pendant la décharge (courbe avec les carrés pleins). La courbe avec les triangles pleins montre le rendement faradique (en %) en fonction du nombre de cycles de la batterie de l'invention.

Les inventeurs ont constaté que les tests lorsqu'ils sont répétés plusieurs fois sont reproductibles au moins sur 60 cycles.

Par ailleurs, les conditions de cyclage à bas régime utilisées permettent d'obtenir des capacités restituées proche de 1 et sont particulièrement drastiques par rapport à la stabilité électrochimique puisqu'à chaque cycle (C/15, D/10) l'électrolyte polymère solide est à un potentiel supérieur à 4,1V vs Li⁺/Li pendant plus de 15 heures. Cela signifie qu'après 30 cycles environ, l'électrolyte polymère solide peut rester plus de 450 heures à haut potentiel et ceci à une température particulièrement élevée de 80°C. Avec un cyclage à (C/4, D/2), le nombre de cycles nécessaire pour atteindre la même durée de résidence à haut potentiel (i.e. 450 heures) serait de plus de 180 cycles.

### Exemple 2 comparatif : préparation d'une batterie lithium métal polymère non conforme à l'invention

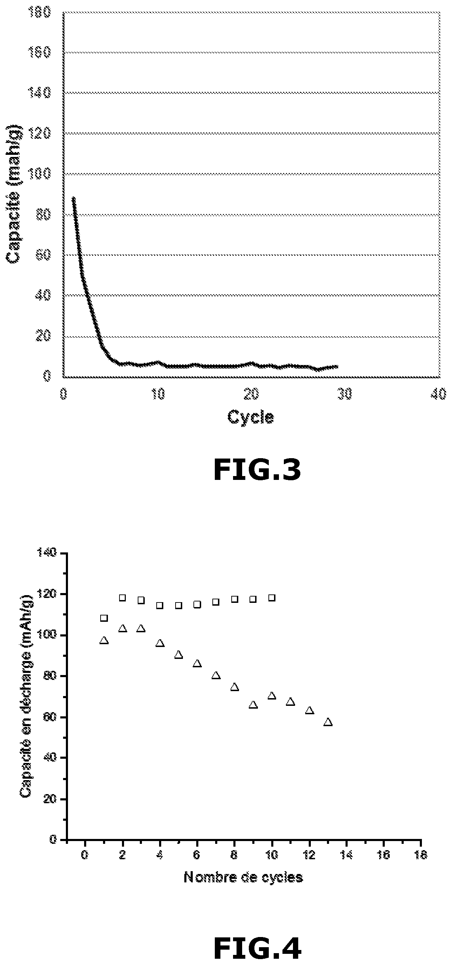

La figure 3 montre la capacité restituée (en mAh/g) en fonction du nombre de cycles d'une batterie non conforme à l'invention.

La batterie non conforme à l'invention comprend :
- une feuille de lithium métal comme électrode négative,
- un électrolyte polymère solide contenant 47,6% en masse de de poly(oxyde d'éthylène-co-oxyde de butylène) (co-P(OE)-(OB), ICPSEB, 115 000 g/mol, Nippon shokubai), 12,4% en masse de LiTFSI, et 40% en masse de copolymère de PVDF-HFP (21510, Solvay), et
- une électrode positive contenant 74% en masse de LiFe_{0,4}Mn_{0,6}PO₄ revêtu d'une couche nanométrique de carbone (2 nm environ d'épaisseur) tel que préparé dans l'exemple 1, 0,5% en masse de noir de carbone Ketjenblack (EC600-jd, AkzoNobel), 20,1% en masse de co-P(OE)-(OB) (ICPSEB, 115 000 g/mol, Nippon shokubai) et 5,4% en masse de LiTFSI.

La figure 3 montre une chute rapide de capacité.

### Exemple 3 : préparation de batteries lithium métal polymère conformes à l'invention

### 1) Synthèse d'un copolymère tri-bloc P₁' : PATFSILi-b-PEO-b-PASTFSILi comprenant 33,2% en masse de PATFSILi

### 1.1) Synthèse du monomère 3-sulfonyl (trifluorométhane sulfonyl) imide propyl acrylate de potassium, ASTFSIK.

Du chlorure d'oxalyle (2,4 ml, 28,3 mmoles) et du N,N-diméthylformamide (0,50 ml) ont été ajoutés goutte à goutte sous argon dans un ballon à fond rond à trois cols contenant 30 ml d'acétonitrile anhydre réfrigéré à 0°C. Le mélange a été agité pendant 1 heure à température ambiante. La solution a ensuite été refroidie à 0°C et du monomère de potassium 3-sulfopropylacrylate (5 g, 21,6 mmoles) a été ajouté dans la solution sous argon. La solution a été agitée en continu à 0°C pendant 3 heures et à température ambiante pendant 2 heures supplémentaires pour obtenir la formation d'acrylate de 3-(chlorosulfonyl)propyle. À cette solution, on a ajouté goutte à goutte une solution de 2,66 g (1,79 x 10⁻² mole) de trifluorométhylsulfonamide et 6,80 ml (4,91 x 10⁻² mole) de triéthylamine dissous dans de l'acétonitrile (10 ml) à 0°C sous argon. Le mélange résultant a ensuite été laissé réagir à 0°C pendant 2 heures et ensuite à température ambiante pendant 16 heures sous argon. Le mélange réactionnel a été filtré et le solide blanc obtenu a été lavé avec de l'acétonitrile. Le filtrat a été concentré sous vide puis dissous dans du dichlorométhane et lavé avec une solution d'acide chlorhydrique 1M et une solution saturée de NaCl, séché sur MgS0₄, filtré et évaporé sous pression réduite. Le produit a été obtenu sous la forme d'une huile ambrée (5,2 g, rendement de 68%). Le monomère acrylate-TFSI potassium a été obtenu par échange de cations avec le carbonate de potassium. Pour ce faire, K₂CO₃ (2 éq) a été ajouté à une solution à 10% de triéthylammonium-3-sulfonyl (trifluorométhane sulfonyl) imide propyl acrylate (1 éq) dans de l'acétonitrile. La réaction a été laissée à température ambiante pendant 24 heures. La solution a ensuite été filtrée et le solvant a été évaporé par évaporateur rotatif. Le solide obtenu a été dispersé dans du dichlorométhane et conservé à -20°C pendant 3 heures. Le solide obtenu a été lavé avec du n-pentane froid, et séché sous vide pour obtenir un solide blanc (rendement de 60%).
RMN ¹H (400 MHz, DMSO-d6) : δ ppm 6,34 (CH₂=CH-, d, IH), 6,18 (CH₂=CH-, dd, IH), 5,95 (CH₂ = CH-, d), 4,19 (-O-CH₂-, t, 2H), 3,05 (-CH₂-SO₂-, t, 2H), 2,01 (-CH₂-, m, 2H).
RMN ¹³C (75 MHz, DMSO-d6) : δ ppm 165,87 (C=O), 132,00 (CH₂=CH-), 128,71 (CH₂=CH-), 125,41-115,74 (-CF₃), 63,01 (-COOCH₂-), 51,72 (-CH₂SO₂-), 23,97 (-COOCH₂-).
RMN ¹⁹F (376 MHz, DMSO-d6) : δ ppm : -77,54.
HR-MS (C₇H₉NO₆S₂F₃K) : m / z = [M-K⁺] trouvée = 323,9832 g.mol⁻¹, [M-K⁺] calculée = 323,9829 g.mol⁻¹.

### 1.2) Synthèse de la macroalcoxvamine PEO-diSG1

On a synthétisé la macroalcoxyamine SG1-MAMA-POE-MAMA-SG1 (ou PEO-diSG1) de formule suivante : 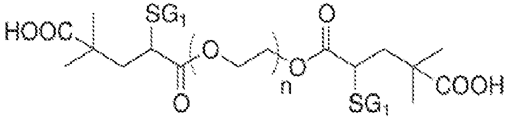 dans laquelle SG1 est tel que défini dans l'invention et la valeur de p est telle que la masse molaire moyenne en nombre (i.e. Mn) du POE est de 35 000 g/mol.

Pour ce faire, 10 g de POE-α,ω hydroxylé (Mn = 35 000 g/mol) et 1,4 ml de triéthylamine ont été solubilisés dans un ballon tricol contenant 40 ml de dichlorométhane. Le mélange réactionnel a été dégazé par bullage d'azote pendant 20 minutes. À l'aide d'une ampoule à brome, on a ensuite introduit goutte à goutte, et à une température de 0°C, 0,9 ml de chlorure d'acryloyle solubilisé (5 éq.) dans 10 ml de dichlorométhane. On a laissé réagir pendant environ 15 heures. Le mélange réactionnel a été filtré pour éliminer le chlorure de triéthylammonium. Le filtrat a été lavé deux fois avec 20 ml d'une solution aqueuse saturée en NaHCO₃. La phase organique a été précipitée dans de l'éther diéthylique. Le diacrylate de POE a été récupéré par filtration puis séchage sous vide. Ensuite, 2 g de diacrylate de POE ont été introduits dans un « Schlenk » muni d'un « Rotaflo ». 0,16 g (4,2 mmoles) de MAMA-SG1 de formule indiquée ci-dessus, dissoute dans 6 ml de THF, ont été introduits sur le diacrylate de POE. La suspension a été désoxygénée par barbotage d'azote pendant 30 minutes. Le « Schlenk » a été plongé dans un bain d'huile thermostaté à 100°C pendant 1 heure. Le POE-(MAMA-SG1)2 (ou PEO-diSG1) a été récupéré par précipitation dans de l'éther.

On obtenu la PEO-diSG1 attendue.

### 1.3) Synthèse d'un copolymère tri-bloc P₁' : PATFSILi-b-PEO-b-PATFSILi

Le copolymère tri-bloc P₁' PATFSILi-*b*-PEO-*b*-PATFSILi a été synthétisé par polymérisation radicalaire contrôlée, en présence de nitroxydes (NMP), d'eau, de l'acrylate-TFSI potassium préparé précédemment et de la macroalcoxyamine PEO-(MAMASG1)2 préparé précédemment comme amorceur à 120°C.

Pour ce faire, 1,61 g de monomère d'acrylate-TFSI potassium, 2,6 g de macroalcoxyamine POE-(MAMASG1)2 et 15 g d'eau ont été placés dans un « Schlenk » muni d'un « Rotaflo ». Lorsque les solides ont été totalement dissous dans l'eau, la solution a été désoxygénée par barbotage d'azote pendant 30 minutes. Le « Schlenk » a ensuite été plongé dans un bain d'huile thermostaté à 120°C pendant 15 heures.

Le monomère n'ayant pas réagi a été éliminé par dialyses successives contre une solution de LiClO₄ et d'eau distillée. En même temps, l'échange des ions K⁺ par les ions Li⁺ a eu lieu. L'eau a ensuite été évaporée, on a obtenu un copolymère tri-bloc P₁' PATFSILi-*b*-PEO-*b*-PATFSILi à simple ion pur, contenant 33,2% en masse de PATFSILi.

### 2) Préparation de batteries LMP

La figure 4 montre la capacité (en mAh/g) en fonction du nombre de cycles de batteries conformes à l'invention pendant la décharge, à savoir d'une première batterie (courbe avec les carrés vides) et d'une deuxième batterie (courbe avec les triangles vides).

La figure 5 montre l'efficacité coulombique (en %) en fonction du nombre de cycles de la première batterie conforme à l'invention (courbe avec les carrés vides) et de la deuxième batterie conforme à l'invention (courbe avec les triangles vides).

La première batterie conforme à l'invention comprenait :
- un électrolyte polymère solide contenant 47,6% en masse de de poly(oxyde d'éthylène-co-oxyde de butylène) (co-P(OE)-(OB), ICPSEB, 115 000 g/mol, Nippon shokubai), 12,4% en masse de LiTFSI, et 40% en masse de copolymère de PVDF-HFP (21510, Solvay),
- une feuille de lithium métal d'épaisseur 50 µm environ, et
- une électrode positive comprenant 51,4% en masse de matière active LiFe_{0,4}Mn_{0,6}PO₄ revêtu d'une couche nanométrique de carbone (2 nm environ d'épaisseur), 41,1% en masse de copolymère bloc P₁ PSTFSILi-POE-PSTFSILi tel que préparé à l'étape 1) de l'exemple 1, et 7,5% en masse de noir de carbone.

La deuxième batterie conforme à l'invention comprenait :
- un électrolyte polymère solide contenant 47,6% en masse de de poly(oxyde d'éthylène-co-oxyde de butylène) (co-P(OE)-(OB), ICPSEB, 115 000 g/mol, Nippon shokubai), 12,4% en masse de LiTFSI, et 40% en masse de copolymère de PVDF-HFP (21510, Solvay),
- une feuille de lithium métal d'épaisseur 50 µm environ, et
- une électrode positive comprenant 65% en masse de matière active LiFe_{0,4}Mn_{0,6}PO₄ revêtu d'une couche nanométrique de carbone (2 nm environ d'épaisseur), 27% en masse de copolymère tri-bloc P₁' PATFSILi-POE-PATFSILi (33,2% en masse de PATFSILi) tel que préparé à l'étape 1) de l'exemple 3, et 8% en masse de noir de carbone.

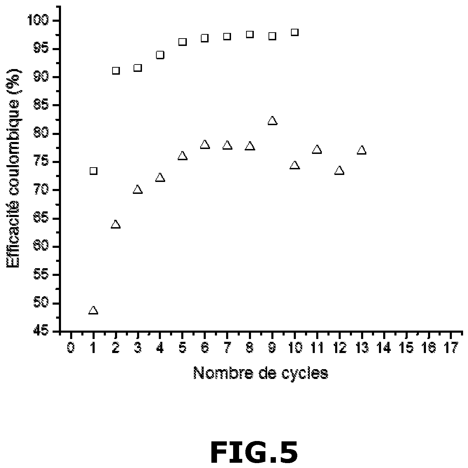

Les figures 4 et 5 montrent que le copolymère bloc P₁ PSTFSILi-POE-PSTFSILi P₁ dans l'électrode positive améliore les performances de résistance au cyclage, notamment en termes de capacité et d'efficacité coulombique.

## Revendications

1. Batterie lithium métal polymère comprenant :
- au moins une électrode négative comprenant du lithium métal ou un alliage de lithium métal,
- au moins une électrode positive comprenant au moins une matière active dont le potentiel est supérieur à 3,7V vs Li⁺/Li, au moins un copolymère bloc P₁ et au moins un agent générant une conductivité électronique, ladite électrode positive étant éventuellement supportée par un collecteur de courant, et
- au moins un électrolyte polymère solide comprenant :
* au moins un copolymère bloc P₁, ou
* au moins un sel de lithium et au moins un matériau polymère à base de poly(oxyde d'éthylène) choisi parmi un copolymère à blocs polystyrène-poly(oxyde d'éthylène), un copolymère à blocs polystyrène-poly(oxyde d'éthylène)-polystyrène, un copolymère statistique poly(oxyde d'éthylène-stat-oxyde de propylène) associé à un agent de renfort, un copolymère statistique poly(oxyde d'éthylène-stat-oxyde de butylène) associé à un agent de renfort et un poly(oxyde d'éthylène) associé à un agent de renfort,
ledit agent de renfort étant choisi parmi les nanofibrilles de cellulose, les nanoparticules céramiques et un polymère ou copolymère fluoré,
ladite batterie lithium métal polymère étant **caractérisée en ce que** :
* la matière active de l'électrode positive est choisie parmi :
(1) les matières actives de type olivine choisies parmi celles de formule LiTₜT'₁₋ₜPO₄ dans laquelle 0 < t < 1 et T et T' sont différents et sont choisis parmi Fe, Mn, Co, Ni et Ti et celles de formule LiMg_{y}Mn_{1-y}PO₄ dans laquelle 0 < y ≤ 0,2,
(2) les matières actives de type fluorophosphates, et
(3) les matières actives de type oxyde lamellaire LiMO₂ avec M représentant un mélange d'au moins deux métaux choisis parmi Al, Ni, Mn et Co, et
* le copolymère bloc P₁ est un copolymère di-bloc de type AB ou tri-bloc de type BAB dans lequel le bloc A est une chaîne de polyoxyéthylène non substituée ayant une masse moléculaire moyenne en nombre inférieure ou égale à 100 kDa ; et le bloc B est un polymère anionique susceptible d'être préparé à partir d'un ou plusieurs monomères vinyliques substitués par l'anion d'un sel sulfonyl(trifluorométhylsulfonyl)imidure de lithium (TFSILi) de formule (I) suivante : 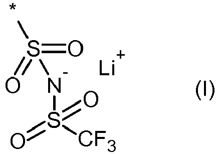 dans laquelle * représente le point d'attachement dudit anion de formule (I) audit monomère vinylique par l'intermédiaire d'une liaison covalente, d'une chaîne alkyle linéaire ayant de 1 à 5 atomes de carbone ou d'une chaîne alcoxy linéaire ayant de 1 à 5 atomes de carbone.

2. Batterie selon la revendication 1, **caractérisée en ce que** le bloc A du copolymère bloc P₁ de l'électrode positive et de l'électrolyte polymère solide comprend de 225 à 2250 motifs d'oxyde d'éthylène.

3. Batterie selon la revendication 1 ou 2, **caractérisée en ce que** la masse moléculaire moyenne du bloc A du copolymère bloc P₁ de l'électrode positive et de l'électrolyte polymère solide varie de 10 à 60 kDa.

4. Batterie selon l'une quelconque des revendications précédentes, **caractérisée en ce que** les monomères vinyliques du copolymère bloc P₁ de l'électrode positive et de l'électrolyte polymère solide sont des monomères vinyliques aromatiques choisis parmi le styrène de sulfonyl(trifluorométhylsulfonyl)imidure de lithium et ses dérivés.

5. Batterie selon l'une quelconque des revendications précédentes, **caractérisée en ce que** le copolymère bloc P₁ de l'électrode positive est choisi parmi les copolymères tri-blocs de type P(STFSILi)-*b*-POE-*b*-P(STFSILi).

6. Batterie selon la revendication 5, **caractérisée en ce que** le rapport P(STFSILi)/POE du copolymère bloc P₁ de l'électrode positive varie de 50 à 70% en masse.

7. Batterie selon l'une quelconque des revendications 1 à 3, **caractérisée en ce que** les monomères vinyliques du copolymère bloc P₁ de l'électrode positive et de l'électrolyte polymère solide sont des monomères vinyliques non aromatiques choisis parmi l'acrylate de sulfonyl(trifluorométhylsulfonyl)imidure de lithium, le méthacrylate de sulfonyl(trifluorométhylsulfonyl)imidure de lithium, l'acrylamide de sulfonyl(trifluorométhylsulfonyl)imidure de lithium, le méthacrylamide de sulfonyl(trifluorométhylsulfonyl)imidure de lithium, l'éthylène-sulfonyl(trifluorométhylsulfonyl)imidure de lithium, le propylène-sulfonyl(trifluorométhylsulfonyl)imidure de lithium, et les diènes-sulfonyl(trifluorométhylsulfonyl)imidure de lithium et la maléimide- sulfonyl(trifluorométhylsulfonyl)imidure de lithium.

8. Batterie selon l'une quelconque des revendications précédentes, **caractérisée en ce que** l'électrolyte polymère solide comprend au moins un copolymère bloc P₁ et ne comprend pas de sels de lithium autres que ceux de formule (I) telle que définie dans la revendication 1 qui sont greffés aux blocs B par l'intermédiaire de leurs anions.

9. Batterie selon l'une quelconque des revendications 1, 5 ou 6, **caractérisée en ce que** l'électrolyte polymère solide comprend au moins un copolymère statistique poly(oxyde d'éthylène-stat-oxyde de butylène) associé à un polymère ou copolymère fluoré.

10. Batterie selon l'une quelconque des revendications précédentes, **caractérisée en ce que** l'électrolyte polymère solide ne comprend pas de plastifiants et/ou de solvants.

11. Batterie selon l'une quelconque des revendications précédentes, **caractérisée en ce que** l'agent générant une conductivité électronique est choisi parmi le noir de carbone, le carbone SP, le noir d'acétylène, les fibres et nanofibres de carbone, les nanotubes de carbone, le graphène, le graphite, les particules et fibres métalliques et l'un de leurs mélanges.

12. Batterie selon l'une quelconque des revendications précédentes, **caractérisée en ce que** l'agent générant une conductivité électronique représente de 0,1 à 10% en masse, par rapport à la masse totale de l'électrode positive.

13. Batterie selon l'une quelconque des revendications précédentes, **caractérisée en ce que** le copolymère bloc P₁ représente de 15 à 35% en masse, par rapport à la masse totale de l'électrode positive.

14. Batterie selon l'une quelconque des revendications précédentes, **caractérisée en ce que** la matière active de l'électrode positive représente de 60 à 85% en masse, par rapport à la masse totale de l'électrode positive.

15. Batterie selon l'une quelconque des revendications précédentes, **caractérisée en ce que** la matière active de l'électrode positive est une matière active de formule LiFeₓMn₁₋ₓPO₄ dans laquelle 0 < x ≤ 0,4.

## Patentansprüche

1. Lithiummetallpolymerbatterie, umfassend:
- mindestens eine negative Elektrode, umfassend Lithiummetall oder eine Lithiummetalllegierung,
- mindestens eine positive Elektrode, umfassend mindestens ein aktives Material, dessen Potential höher als 3,7V vs. Li⁺/Li ist, mindestens ein Blockcopolymer P₁ und mindestens ein Mittel, das eine elektronische Leitfähigkeit erzeugt, wobei die positive Elektrode eventuell von einem Stromsammler unterstützt wird, und
- mindestens einen festen Polymerelektrolyten, umfassend:
* mindestens ein Blockcopolymer P₁, oder
* mindestens ein Lithiumsalz und mindestens ein Polymermaterial auf der Basis von Polyethylenoxid, ausgewählt aus einem Polystyrol-Polyethylenoxid-Blockcopolymer, einem Polystyrol-Polyethylenoxid-Polystyrol-Blockcopolymer, einen statistischen Polyethylenoxid-stat-Propylenoxid-Copolymer in Kombination mit einem Verstärkungsmittel, einem statistischen Polyethylenoxid-stat-Butylenoxid-Copolymer in Kombination mit einem Verstärkungsmittel und ein Polyethylenoxid in Kombination mit einem Verstärkungsmittel,
wobei das Verstärkungsmittel aus den Cellulose-Nanofibrillen, den keramischen Nanopartikeln und einem fluorierten Polymer oder Copolymer ausgewählt ist,
wobei die Lithiummetallpolymerbatterie **dadurch gekennzeichnet ist, dass**:
* das aktive Material der positiven Elektrode ausgewählt ist aus:
(1) den aktiven Materialien vom Typ Olivin, ausgewählt aus denen der Formel LiTₜT'₁₋ₜPO₄, wobei 0 < t < 1 und T und T' unterschiedlich sind und aus Fe, Mn, Co, Ni und Ti ausgewählt sind und denen der Formel LiMg_{y}Mn_{1-y}PO₄, wobei 0 < y ≤ 0,2 ist,
(2) den aktiven Materialien vom Typ Fluorophosphate, und
(3) den aktiven Materialien vom Typ lamellares Oxid LiMO₂ mit M, das ein Gemisch von mindestens zwei Metallen darstellt, die aus Al, Ni, Mn und Co ausgewählt sind, und
* das Blockcopolymer P₁ ein Diblockcopolymer vom Typ AB oder Triblock vom Typ BAB ist, wobei der Block A eine nicht substituierte Polyoxyethylenkette mit einer mittleren Molekularmasse zahlenmäßig unter oder gleich 100 kDa ist; und der Block B ein anionisches Polymer ist, das aus einem oder mehreren Vinylmonomeren hergestellt ist, die durch das Anion eines Lithium-Sulfonyl(trifluoromethylsulfonyl)imidursalzes (TFSILi) der folgenden Formel (I) substituiert sind: 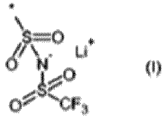 wobei * den Anknüpfungspunkt des Anions der Formel (I) an das Vinylmonomer über eine kovalente Bindung, eine lineare Alkylkette mit 1 bis 5 Kohlenstoffatomen oder eine lineare Alcoxykette mit 1 bis 5 Kohlenstoffatomen darstellt.

2. Batterie nach Anspruch 1, **dadurch gekennzeichnet, dass** der Block A des Blockcopolymers P₁ der positiven Elektrode und des festen Polymerelektrolyten 225 bis 2250 Ethylenoxidmotive umfasst.

3. Batterie nach Anspruch 1 oder 2, **dadurch gekennzeichnet, dass** die mittlere molekulare Masse des Blocks A des Blockcopolymers P₁ der positiven Elektrode und des festen Polymerelektrolyten von 10 bis 60 kDa schwankt.

4. Batterie nach einem der vorangehenden Ansprüche, **dadurch gekennzeichnet, dass** die Vinylmonomere des Blockcopolymers P₁ der positiven Elektrode und des festen Polymerelektrolyten aromatische Vinylmonomere sind, ausgewählt aus dem Lithium-Sulfonyl(trifluoromethylsulfonyl)imidurstyrol und seinen Derivaten.

5. Batterie nach einem der vorangehenden Ansprüche, **dadurch gekennzeichnet, dass** das Blockcopolymer P₁ der positiven Elektrode aus den Triblockcopolymeren vom Typ P(STFSILi)-*b*-POE-*b*-P(STFSILi) ausgewählt ist.

6. Batterie nach Anspruch 5, **dadurch gekennzeichnet, dass** das Verhältnis P(STFSILi)/POE des Blockcopolymers P₁ der positiven Elektrode von 50 bis 70 Ma% schwankt.

7. Batterie nach einem der Ansprüche 1 bis 3, **dadurch gekennzeichnet, dass** die Vinylmonomere des Blockcopolymers P₁ der positiven Elektrode und des festen Polymerelektrolyten nichtaromatische Vinylmonomere sind, ausgewählt aus dem Lithium-Sulfonyl(trifluoromethylsulfonyl)imiduracrylat, dem Lithium-Sulfonyl(trifluoromethylsulfonyl)imidurmethacrylat, dem Lithium-Sulfonyl(trifluoromethylsulfonyl)imiduracrylamid, dem Lithium-Sulfonyl(trifluoromethylsulfonyl)imidurmethacrylamid, dem Lithium-Ethylen-Sulfonyl(trifluoromethylsulfonyl)imidur, dem Lithium-Propylen-Sulfonyl(trifluoromethylsulfonyl)imidur und dem Lithium-Dien-Sulfonyl(trifluoromethylsulfonyl)imidur und dem Lithium-Maleimid-Sulfonyl(trifluoromethylsulfonyl)imidur.

8. Batterie nach einem der vorangehenden Ansprüche, **dadurch gekennzeichnet, dass** der feste Polymerelektrolyt mindestens ein Blockcopolymer P₁ umfasst und keine anderen Lithiumsalze als die der Formel (I) wie in Anspruch 1 definiert umfasst, die über ihre Anionen auf die Blöcke B gepfropft sind.

9. Batterie nach einem der Ansprüche 1, 5 oder 6, **dadurch gekennzeichnet, dass** der feste Polymerelektrolyt mindestens ein statistisches Polyethylenoxid-stat-Butylenoxid-Copolymer umfasst, das einem Polymer oder einem fluorierten Copolymer zugeordnet ist.

10. Batterie nach einem der vorangehenden Ansprüche, **dadurch gekennzeichnet, dass** der feste Polymerelektrolyt keine Weichmacher und/oder Lösungsmittel umfasst.

11. Batterie nach einem der vorangehenden Ansprüche, **dadurch gekennzeichnet, dass** das Mittel, das eine elektronische Leitfähigkeit erzeugt, aus dem Carbonschwarz, dem SP-Carbon, dem Acetylenschwarz, den Carbonfasern und -nanofasern, den Carbonnanoröhrchen, dem Graphen, dem Graphit, den Metallpartikeln und -fasern und einem ihrer Gemische ausgewählt ist.

12. Batterie nach einem der vorangehenden Ansprüche, **dadurch gekennzeichnet, dass** das Mittel, das eine elektronische Leitfähigkeit erzeugt, 0,1 bis 10 Ma% in Bezug auf die Gesamtmasse der positiven Elektrode darstellt.

13. Batterie nach einem der vorangehenden Ansprüche, **dadurch gekennzeichnet, dass** das Blockcopolymer P₁ 15 bis 35 Ma% in Bezug auf die Gesamtmasse der positiven Elektrode darstellt.

14. Batterie nach einem der vorangehenden Ansprüche, **dadurch gekennzeichnet, dass** das aktive Material der positiven Elektrode 60 bis 85 Ma% in Bezug auf die Gesamtmasse der positiven Elektrode darstellt.

15. Batterie nach einem der vorangehenden Ansprüche, **dadurch gekennzeichnet, dass** das aktive Material der positiven Elektrode ein aktives Material der Formel LiFeₓMn₁₋ₓPO₄ ist, wobei 0 < x ≤ 0,4 ist.

## Claims

1. Lithium metal polymer battery comprising:
- at least one negative electrode comprising a lithium metal or a lithium metal alloy;
- at least one positive electrode comprising at least one active material having a potential higher than 3.7V vs Li⁺/Li, at least one block copolymer P₁ and at least one agent generating electron conductivity, said positive electrode optionally being supported by a current collector; and
- at least one solid polymer electrolyte comprising:
* at least one block copolymer P₁, or
* at least one lithium salt and at least one poly(ethylene oxide) polymer material selected from among a block polystyrene-poly(ethylene oxide) copolymer, a block polystyrene-poly(ethylene oxide)-polystyrene copolymer, a statistical poly(ethylene oxide-stat-propylene oxide) copolymer associated with a reinforcing agent, a statistical poly(ethylene oxide-stat-butylene oxide) copolymer associated with a reinforcing agent, and a poly(ethylene oxide) associated with a reinforcing agent,
said reinforcing agent being selected from among cellulose nanofibrils, ceramic nanoparticles and a fluorinated polymer or copolymer,
said lithium metal polymer battery being **characterized in that**:
* the active material of the positive electrode is selected from among:
(1)active materials of olivine type selected from among those of formula LiTₜT'₁₋ₜPO₄ where o < t < 1 and T and T' are different and are selected from among Fe, Mn, Co, Ni and Ti, and those of formula LiMg_{y}Mn_{1-y}PO₄ where 0 < y ≤ 0.2;
(2)active materials of fluorophosphate type; and
(3)active materials of LiMO₂ lamellar oxide type where M is a mixture of at least two metals selected from among Al, Ni, Mn and Co; and
* the block copolymer P₁ is a diblock copolymer of AB type or triblock of BAB type where block A is a non-substituted polyoxyethylene chain having a number average molecular weight less than or equal to 100 kDa; and block B is an anionic polymer able to be prepared from one or more vinyl monomers substituted by the anion of a lithium sulfonyl (trifluoromethylsulfonyl) imide salt (TFSILi) of following formula (1): 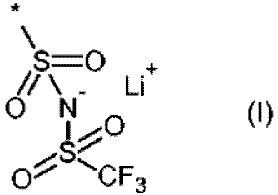
where * is the attachment point of said anion of formula (I) onto said vinyl monomer via a covalent bond of a linear alkyl chain having 1 to 5 carbon atoms or linear alkoxy chain having 1 to 5 carbon atoms.

2. The battery according to claim 1, **characterized in that** block A of the block copolymer P₁ of the positive electrode and of the solid polymer electrolyte comprises from 225 to 2250 ethylene oxide repeat units.

3. The battery according to claim 1 or 2, **characterized in that** the average molecular weight of block A of the block copolymer P₁ of the positive electrode and of the solid polymer electrolyte varies from 10 to 60 kDa.

4. The battery according to any of the preceding claims, **characterized in that** the vinyl monomers of the block copolymer P₁ of the positive electrode and of the solid polymer electrolyte are aromatic vinyl monomers selected from among the styrene of lithium sulfonyl (trifluoromethylsulfonyl) imide and the derivatives thereof.

5. The battery according to any of the preceding claims, **characterized in that** the block copolymer P₁ of the positive electrode is selected from among triblock copolymers of type P(STFSILi)-*b*-POE-*b*-P(STFSILi).

6. The battery according to claim 5, **characterized in that** the P(STFSILi):POE ratio of the block copolymer P₁ of the positive electrode varies from 50 to 70 weight %.

7. The battery according to any of claims 1 to 3, **characterized in that** the vinyl monomers of the block copolymer P₁ of the positive electrode and of the solid polymer electrolyte are non-aromatic vinyl monomers selected from among the acrylate of lithium sulfonyl (trifluoromethylsulfonyl) imide, the methacrylate of lithium sulfonyl (trifluoromethylsulfonyl) imide, the acrylamide of lithium sulfonyl (trifluoromethylsulfonyl) imide, the methacrylamide of lithium sulfonyl (trifluoromethylsulfonyl) imide, lithium ethylene-sulfonyl (trifluoromethylsulfonyl) imide, lithium propylene-sulfonyl (trifluoromethylsulfonyl) imide, lithium diene-sulfonyl (trifluoromethylsulfonyl) imides and lithium maleimide-sulfonyl (trifluoromethylsulfonyl) imide.

8. The battery according to any of the preceding claims, **characterized in that** the solid polymer electrolyte comprises at least one block copolymer P₁ and does not comprise any lithium salts other than those of formula (I) such as defined in claim 1 and which are grafted onto blocks B via the anions thereof.

9. The battery according to claims 1, 5 or 6, **characterized in that** the solid polymer electrolyte comprises at least one statistical poly(ethylene oxide-stat-butylene oxide) copolymer associated with a fluorinated polymer or copolymer.

10. The battery according to any of the preceding claims, **characterized in that** the solid polymer electrolyte does not comprise any plasticizers and/or solvents.

11. The battery according to any of the preceding claims, **characterized in that** the agent generating electron conductivity is selected from among carbon black, SP carbon, acetylene black, carbon fibres and nanofibres, carbon nanotubes, graphene, graphite, metal particles and fibres and one of the mixtures thereof.

12. The battery according to any of the preceding claims, **characterized in that** the agent generating electron conductivity represents from 0.1 to 10 weight % relative to the total weight of the positive electrode.

13. The battery according to any of the preceding claims, **characterized in that** the block copolymer P₁ represents from 15 to 35 weight % relative to the total weight of the positive electrode.

14. The battery according to any of the preceding claims, **characterized in that** the active material of the positive electrode represents from 60 to 85 weight % relative to the total weight of the positive electrode.

15. The battery according to any of the preceding claims, **characterized in that** the active material of the positive electrode is an active material of formula LiFeₓMn₁₋ₓPO₄ where 0 < x ≤ 0.4.
